# EUROPÄISCHE PATENTSCHRIFT

(11) **EP 2 117 977 B1**
(45) Veröffentlichungstag und Bekanntmachung des Hinweises auf die Patenterteilung: **12.05.2010**
(21) Anmeldenummer: 07856814.4
(22) Anmeldetag: 18.12.2007
(51) Int. Cl.: B65G 47/64, B65G 47/71, B65G 47/80

(54) **SORTER**
SORTER
TRIEUR

(30) Priorität: 20.12.2006 DE 102006060303
(43) Veröffentlichungstag der Anmeldung: 18.11.2009
(73) Patentinhaber: Edelmann, Klaus, 67547 Worms (DE)
(72) Erfinder: EDELMANN, Klaus, 67547 Worms (DE); EHRHARDT-CASPERS, Helge, 53639 Königswinter (DE)
(74) Vertreter: Wagner, Jutta
(86) Internationale Anmeldenummer: PCT/EP2007/011082
(87) Internationale Veröffentlichungsnummer: WO 2008/074453

(56) Entgegenhaltungen:
- WO-A-2006/002156
- DE-U1- 29 511 788
- FR-A- 2 104 687

## Beschreibung

Die vorliegende Erfindung betrifft eine Vorrichtung und ein Verfahren zum Verteilen von auf einem Zustellband angelieferten Gütern auf zwei oder mehr Abförderbänder.

Es ist bekannt, dass das integrierte und multifunktionale sowie bei Bedarf reversierbare Verfahren und die dazu notwendigen Vorrichtungen zum Sortieren, Mergen, Einschießen und Richtungsändern von bandfähigen Gütern ein erhebliches Problem darstellen. Es werden lediglich Verfahren und Vorrichtungen mit Einzelfunktionen angeboten. Es kommen bisher lediglich reversierbare Förderer mit ausschließlicher einer oder max. 2 der oben genannten Funktionen des Materialflusses zum Einsatz, siehe z.B. WO 2006/002156.

Somit werden die oben genannten Grundfunktionen mit verschiedenen Vorrichtungen und jeweiligen Einzelverfahren mit den damit verbundenen Nachteilen, wie z. B. erhöhter Flächenbedarf, höhere Anschaffungskosten und unflexible Layoutentwicklung der Materialflusssysteme in Logistiksystemen eingesetzt.

Weiterhin ist bekannt, Güter, wie z. B. Postpakete auf einen Verteiler zu geben, der eine Vielzahl einzelner angetriebener Rollen aufweist, deren Achse horizontal derartig bedarfsweise gedreht wird, dass das Gut zum jeweils erforderlichen Abführband bewegt wird. Die Adressen werden vor der Aufgabe auf den Verteiler erfasst, der Verteiler erhält die diesbezügliche Information, und durch mehrere hintereinander angeordnete Verteiler gelingt eine entsprechende Auflösung.

Nachteilig an dieser Lösung ist die komplizierte Konstruktion des Verteilers, die Einzelrollen müssen sowohl horizontal schwenkbar, als auch einzeln angetrieben sein, was eine relativ aufwendige und störungsanfällige Mechanik erfordert.

Die vorliegende Erfindung hat sich daher die Aufgabe gestellt, eine Möglichkeit für eine deutlich einfachere und besonders störungsunanfällige Konstruktion zu schaffen, die die Zahl der Betriebsunterbrechungen deutlich reduziert, da mit einer solchen Lösung auch deutlich größere Wartungsintervalle erreicht werden können.

Die Lösung dieser Aufgabe gelingt mit einer Vorrichtung zum Verteilen von auf einem oder mehreren Zustellbändern angelieferten Gütern auf zwei oder mehr Abförderbänder, wobei die Zustellbänder und ebenso die Abförderbänder aufgeteilt sind in mehrere parallel nebeneinander und gemeinsam angetriebene Einzelbänder. Zwischen den Zustell- und den Abförderbändern befindet sich ein Drehtisch mit einer im wesentlichen kreisrunden Kontur, der ebenfalls eine Vielzahl von parallelen Einzelbändern aufweist, die ebenfalls einem gemeinsamem Antrieb zugeordnet sind, wobei die Zustell- und die einzelnen Abförderbänder jeweils nahe an die Einzelbänder des Drehtisches heranreichen und ihre Länge im Wesentlichen der kreisförmigen Kontur des Drehtisches angepasst ist.

Die erfindungsgemäße Unterteilung in eine Vielzahl von Einzelbändern sowohl auf dem Drehtisch, als auch auf den Zustell- und Abforderbändern schafft einmal die Möglichkeit, eine annähernd kreisförmige Kontur für den Drehtisch und die peripher anschließenden Zustell- und Abförderbänder zu schaffen, sodass diese ohne Auftreten zu großer Spalte relativ zu einander bewegt werden können, d. h. es sind grundsätzlich auch die Zustell- und Abförderbänder zu unterschiedlichen Positionen zueinander bringbar. Gleichzeitig eröffnet dies aber auch die Möglichkeit, mit einer Antriebswelle jeweils alle Bänder anzutreiben, sodass der Drehtisch und die Zustell- und Abförderbänder auch je nur einen Motor benötigen.
Die Begriffe Zustell- und Abförderbänder sind dabei willkürlich gewählt, ihre Funktion lässt sich bedarfsweise umkehren, wie weiter unten näher erläutert wird.

Der Antrieb der Zustell- und Abförderbänder erfolgt vorzugsweise über eine am vom Drehtisch abgewandten Ende der Bänder angeordnete Welle, da diese hier nicht an die Drehtischperipherie heranreicht und somit eine gerade Endkante aufweist, die von den um die Wellen herumgeführten Trums definiert wird.

Der Antrieb der Drehtischbänder erfolgt mittig und quer zu diesen. Dazu wird vorgeschlagen, die jeweiligen Untertrums der Einzelbänder eine Welle untergreifen zu lassen, wobei der Antrieb durch eine Gegenwelle erfolgt, die die Untertrums an die Welle drückt und somit die Einzelbänder unter Reibschluss antreibt.

Um die Bandreibung gegenüber der Welle zu erhöhen, wird weiterhin vorgeschlagen, neben der Welle Spannrollen anzuordnen, die durch eine gespannte Feder belastet sind und das Untertrum beidseitig hochdrücken und derart den Umschlingungswinkel des Untertrums gegenüber der Welle deutlich erhöhen.

In analoger Weise können natürlich auch Spannrollen neben den Abtriebswellen für die Bänder der Zustell- und Abfördereinheiten vorgesehen sein. Eine beidseitige paarweise Anordnung ist hier nicht vorgesehen, da ohnehin eine Umschlingung von 180° vorliegt.

Die relativ schmalen Einzelbänder weisen z. B. eine Breite von 100 mm auf und sind auf ihrer Innenseite mit einer Kehlleiste versehen, die in entsprechenden Kehlungen der Umlenk- oder der Antriebswellen läuft und durch diese geführt wird.

Der Drehtisch ruht auf einem Zahnkranz, der mit einem Antriebsritzel kämmt, um diesen in die gewünschte Position zu bringen. Dabei wird der Motor für die Gegenwelle natürlich mit bewegt, wobei dieser Antrieb vorzugsweise über einen Zahnriemen erfolgt.

Die äußeren Enden der Einzelbänder des Drehtisches sind auf Kreisbogensegmenten abgestützt, auf denen sie gleiten oder über Walzlager gelagert sein können, sie können auch mit diesem bewegt werden, wenn eine entsprechende Unterkonstruktion vorliegt.

Ebenso stützen sich die inneren Enden der Einzelbänder der Zustell- und Abfördereinheiten auf analogen, koaxial zu dem Drehtisch verlaufenden Bogensegmenten ab. Eine typische Ausführung der Erfindung weist einen Durchmesser des Drehtisches von ca. 1,7 m auf und ist mit 17 Einzelbändern ausgestattet, wobei jeweils 9 Zufuhr- und Abfördereinzelbänder an ihren Einheiten vorgesehen sind. Eine solche Vorrichtung dient zum Verteilen von Postgut. Andere Einsatzbereiche erfordern andere Geometrien.

Die Einzelbänder der Zufuhr- und Abfördereinheiten können sowohl fluchtend als auch versetzt oder radial an den Drehtisch anschließen, insbesondere auch gegeneinander querstehen. Das erfindungsgemäße Verfahren besteht demnach darin, dass man das Stückgut auf ein Zustellband bringt, das eine Vielzahl paralleler Einzelbänder aufweist, von diesem das Stückgut auf einen Drehteller überträgt, der ebenfalls eine Vielzahl paralleler synchron bewegter Einzelbänder aufweist, den Drehtisch in die gewünschte Lage dreht und aus dieser auf eines von mindestens zwei Abförderbändern überträgt, die ebenfalls synchron angetriebene parallele Einzelbänder aufweisen. Die Erfindung dient somit einer multifunktionalen Nutzung in Materialflusssystemen von bandfähigen Gütern, wie z. B. Paketen, die vorzugsweise dort Anwendung findet, wo aufgrund funktionaler Anforderungen wie Sortier-, Merge-, Einschuss- und Richtungsänderungsvorgänge (ggf. auch reversierbar) sowie aufgrund und raumplanerischer Prozess- und Layoutanforderungen hochkompakte und platzsparende Verfahren und Vorrichtungen zu wirtschaftlichen Lösungen der Multifunktion in Materialflusssystemen erforderlich sind.

Das vorgeschlagene Verfahren beinhaltet sowohl eine mögliche Verknüpfung aller vier oben genannten Grundfunktionen im Materialfluss von bandfähigen Stückgütern als auch nur mehr als zwei der oben genannten Grundfunktionen und bietet die Möglichkeit, platzsparend durch die multifunktionale Nutzung eines Mechanismus für verschiedene im Materialfluss von bandfähigen Stückgütern möglichen oder ggf. im Prozess notwendigen Funktionen in einem Mechanismus verfahrenstechnisch zu integrieren. Hierbei werden das Sortieren, Zusammenführen, Einschiessen in einen bestehenden Materialfluss (z. B. einen bestehenden Colli-Rundlauf) sowie auch das Richtungsändern von bandfähigen Stückgutströmen zur Bildung z. B. eines Rundlaufes funktional einer Verfahrensbündelung im Rahmen der entsprechenden vorgeschlagenen Vorrichtung dafür zusammengefasst.

Anhand der beiliegenden Figuren wird die vorliegende Erfindung näher erläutert, dabei zeigen
**Fig. 1** ein Prinzipskizze der Erfindung in Draufsicht,
**Fig. 2** den Antrieb der Einzelbänder sowie den Aufbau des Drehtisches und einer Fördereinheit
**Fig. 3** die Vorrichtung in Stirnansicht als Ausschnitt und
**Fig. 4** Möglichkeiten der Fahrweise der Vorrichtung.

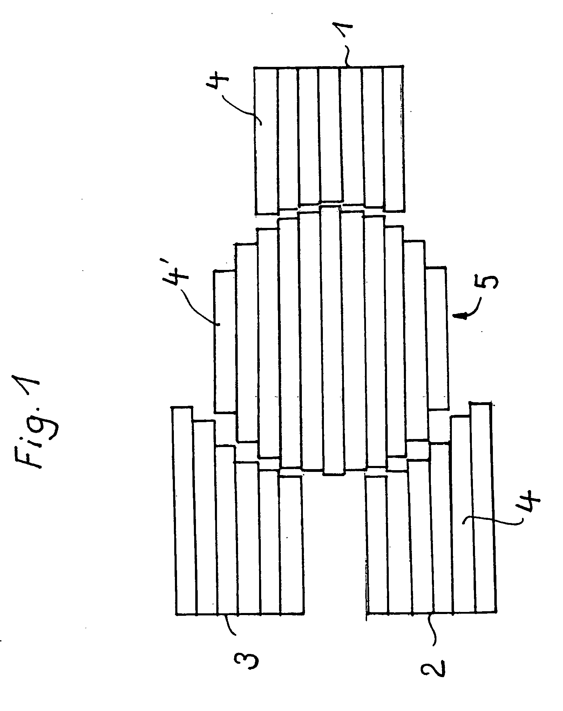

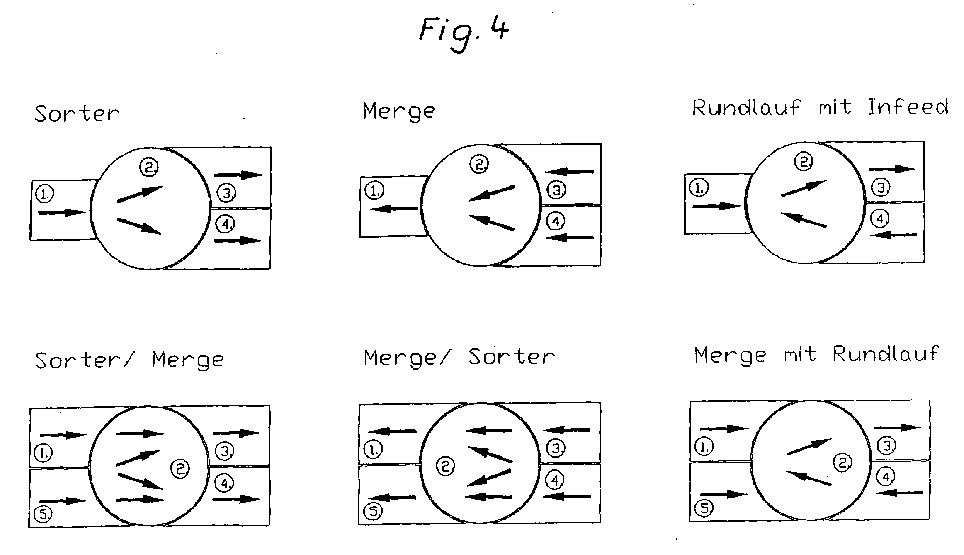

In **Fig. 1** sind drei Fördereinheiten 1, 2, 3 dargestellt und zwischen diesen der Drehtisch 5. Die Fördereinheit 1 kann z. B. als Zustellband dienen und die Einheiten 2, 3 als Abförderbänder. Die Einheiten 1, 2, 3 können grundsätzlich in beliebigen Winkeln zu einander um den Drehtisch 5 herum angeordnet sein. Sowohl die Einheiten 1, 2, 3 als auch der Drehtisch 5 weisen schmale, z. B. 100 mm breite Förderbänder 4' auf, die je synchron angetrieben sind. Stellt man ein Paket (nicht dargestellt) über die Einheit 1 zu und übergibt dieses auf den Drehtisch 5, so erfassen die Bänder 4' dieses und bewegen es vorwärts. Dabei wird der Tisch 5 in die gewünschte Richtung gedreht, um das Paket auf eine der Einheiten 2, 3 zu übergeben, die in diesem Falle die Abförderbänder darstellen. Weitere Möglichkeiten einer Verteilung sind unter Fig. 4 erläutert.

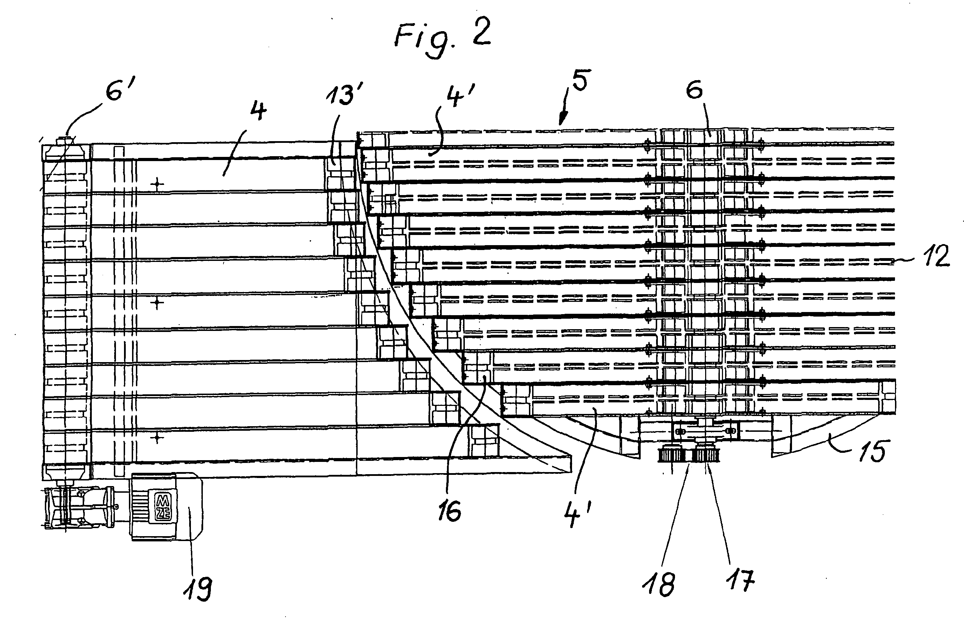

**Fig. 2** veranschaulicht ebenfalls in Draufsicht den Aufbau des Drehtisches 5 sowie eine Einheit 2, die z. B. abfördert.
Der Antrieb der Einzelbänder 4' erfolgt über eine mittige Welle 6, die Bänder 4' sind über endständige separate Rollen 13 geführt, die der Peripherie des Tisches folgend gegeneinander jeweils gestaffelt sind.
Die Rollen 13 besitzen mittige Nuten 16, in welchen an der Unterseite der Bänder aufgebrachte Kehlleisten 12 laufen, um die Bänder 4' zu zentrieren.
Die Bänder 4' sind auf einer Rundleiste 15 abgestützt, wobei sie auf dieser laufen können oder aber sich mit dieser drehen.
Der Antrieb der Welle 6 erfolgt über Zahnräder 17 sowie einen Zahnriemen 18. Die Bänder 4 besitzen ebenfalls Kehlleisten auf ihrer Unterseite und laufen ebenfalls über Endrollen 13', die zueinander derart versetzt sind, dass sie der Peripherie des Drehtisches 5 mit geringem Abstand angenähert sind.
Der Antrieb erfolgt hier über einen Motor 19, der eine endständige Welle 6' antreibt, wobei diese Welle 6' ebenso wie die Rollen 13' genutet sind und auch die Bänder hier Kehlleisten aufweisen.

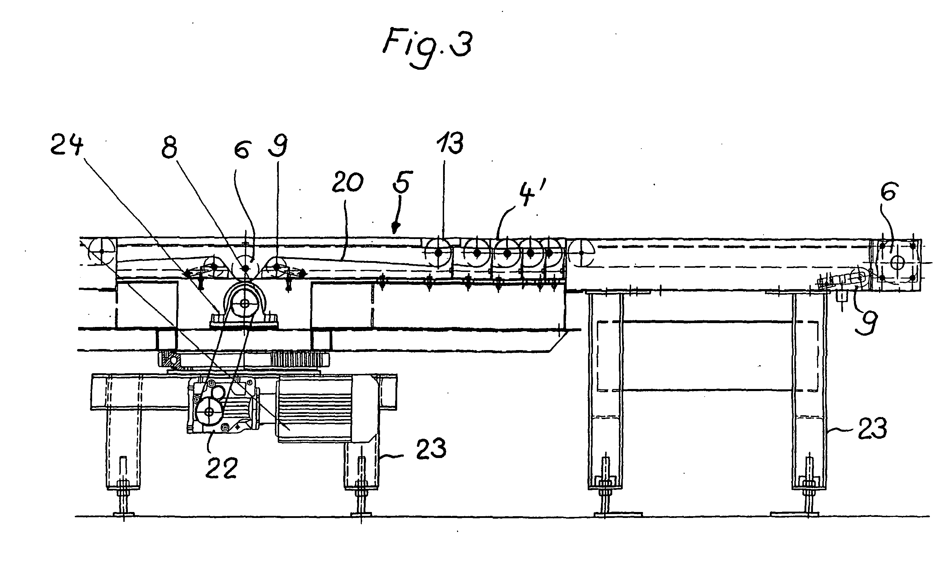

**Fig. 3** zeigt den erfindungsgemäßen Antrieb der Bänder 4' des Drehtisches 5 sowie die rechten gestaffelten Endrollen 13.
Die Untertrums 20 untergreifen die Welle 6 und werden von einer in einem Lager 24 gelagerten Gegenwelle 8 gegen die Welle 6 gedrückt, um Reibschluss herzustellen. Neben der Welle 6 befinden sich Spannrollen 9, die die Untertrums 20 hochdrücken und für einen größeren Umschlingungswinkel sorgen.
Der Drehtisch 5 ruht auf einem motorgetriebenen Zahnkranz 21, der auch den Motor 22 zum Abtrieb der Gegenwelle 8 trägt, wobei die Welle 6 grundsätzlich formschlüssig angetrieben sein kann.
Der Zahnkranz 21 ruht auf einem Gestell 23. In der rechts dargestellten, z. B. als Zustellband dienenden Einheit 1 ist angedeutet, dass auch der Antriebswelle 6' eine Spannrolle 9 zugeordnet sein kann. Die Einheiten für die Zustell- und Abförderbänder liegen auf eigenen Gestellen 23. Mit 22 ist der Motor zum Antrieb des Zahnkranzes 21 bezeichnet.

**Fig. 4** veranschaulicht das Prinzip der Umleitung von Gütern, wie insbesondere von Paketen mit z. B. drei (erste Reihe) und vier Einheiten für eine Zu- und Abförderung in Längsrichtung. Selbstverständlich können sich auch quer dazu weitere Einheiten anschließen.
Erkennbar ist dabei, dass die durch die Pfeile angeordneten Förderrichtungen sich bedarfsweise auch umkehren lassen. Weiterhin ist angedeutet, dass der Drehtisch nicht auf eine rechts/links Schwenkbewegung begrenzt ist, er kann auch im Rundlauf betrieben werden.

### Bezugszeichenliste

- 1: Zustellband
- 2, 3: Abförderbänder
- 4, 4': Einzelbänder
- 5: Drehtisch
- 6, 6': Welle
- 7: Untertrums
- 8: Gegenwelle
- 9: Spannrollen
- 10: Zahnkranz
- 11: Gestell
- 12: Leisten
- 13, 13': Endrollen
- 14: Kehlungen
- 15: Rundleiste
- 16: Nuten
- 17: Zahnräder
- 18: Zahnriemen
- 19: Motor
- 20: Untertrum
- 21: Zahnkranz
- 22: Motor
- 23: Gestell
- 24: Lager

## Patentansprüche

1. Vorrichtung zum Verteilen von auf einem oder mehreren Zustellbändern (1) angelieferten Gütern auf zwei oder mehr Abförderbänder (2, 3), **gekennzeichnet durch** die folgenden Merkmale:
a) die Zustellbänder (1) und ebenso die Abförderbänder (2, 3) sind aufgeteilt in eine Vielzahl parallel nebeneinander und jeweils gemeinsam angetriebene Einzelbänder (4),
b) zwischen den Zustell- (1) und den Abförderbändern (2, 3) befindet sich ein Drehtisch (5), der auf einem mit einem Antriebsritzel kämmenden Zahnkranz (21) drehbar gelagert ist und der eine im Wesentlichen kreisrunde Kontur hat, wobei der Drehtisch (5) ebenfalls eine Vielzahl von parallelen Einzelbändern (4) aufweist,
c) die ebenfalls einem gemeinsamen Antrieb zugeordnet sind, wobei
d) die Zustell- (1) und die einzelnen Abförderbänder (2, 3) jeweils nahe an die Einzelbänder (4') des Drehtisches (5) heranreichen und ihre Länge im Wesentlichen der kreisförmigen Kontur des Drehtisches angepasst sind,
e) wobei die Vorrichtung reversierbar betreibbar ist.

2. Vorrichtung nach Anspruch 1, **dadurch gekennzeichnet, dass** die Einzelbänder (4) des Drehtisches (5) über eine gemeinsame Welle (6) angetrieben sind, die mittig und quer zu diesen verläuft.

3. Vorrichtung nach Anspruch 1 oder 2, **dadurch gekennzeichnet, dass** die Untertrums (7) der Einzelbänder (4') des Drehtisches (5) die Welle (6) untergreifen und über eine Gegenwelle (8) in Reibschluss angetrieben sind.

4. Vorrichtung nach Anspruch 2 oder 3, **dadurch gekennzeichnet, dass** neben der Antriebswelle (6) Spannrollen (9) paarweise angeordnet sind, die die Bänder 4' nach oben drücken und derart den Umschlingungswinkel unter Reibungserhöhung vergrößern.

5. Vorrichtung nach Anspruch 1 bis 4, **dadurch gekennzeichnet, dass** den Endrollen der Einzelbänder (4, 4') ebenfalls Spannrollen (9) zugeordnet sind.

6. Vorrichtung nach Anspruch 1 bis 5, **dadurch gekennzeichnet, dass** die Einzelbänder (4, 4') innenliegend mittige Leisten (12) aufweisen, die über Endrollen (13) laufen, die Kehlungen (14) aufweisen, die diese führen.

7. Vorrichtung nach Anspruch 1 bis 6, **dadurch gekennzeichnet, dass** der Zahnkranz (21) auf einem Gestell (23) gelagert ist.

8. Vorrichtung nach Anspruch 1 bis 7, **dadurch gekennzeichnet, dass** die Einzelbänder eine Breite von 100 mm aufweisen.

9. Verfahren zum Verteilen von Stückgütern, wobei eine Vorrichtung zum Verteilen nach einem der Ansprüche 1 bis 8 verwendet wird, **umfassend die Schritte:**
a) Aufgeben der Stückgüter auf zumindest ein Zustellband (1),
b) Überführen der Stückgüter auf einen zwischen den Zustell- (1) und den Abförderbändern (2,3) befindlichen ein Drehtisch (5), der auf einem mit einem Antriebsritzel kämmenden Zahnkranz (21) drehbar gelagert ist und der eine im Wesentlichen kreisrunden Kontur hat,
c) Überführen der Stückgüter von dem Drehtisch (5) auf zumindest ein Abförderband (2,3),
d) und jeweils gemeinsames Antreiben der Vielzahl von parallel nebeneinander und gemeinsam angetriebener Einzelbänder, aus denen das Zustellband (1), die Abförderbändern (2,3) und der Drehtisch (5) besteht.

10. Verfahren nach Anspruch 9, **umfassend die Schritte:**
d) Reversieren einer Förderrichtung von zumindest einem der Zustellbänder (1) und der Abförderbänder (2,3).

11. Verfahren nach Anspruch 9 oder 10, wobei das Befördern zumindest einen der Schritte Verteilen, Zusammenführen, umlaufen Lassen oder eine Kombination mehrerer der vorgenannten Schritte umfasst.

## Claims

1. An apparatus for distributing goods delivered on one or more feeding conveyor belts (1) onto two or more removal conveyor belts (2, 3), **characterized by** the following features:
a) both the feeding conveyor belt (1) and the removal conveyor belts (2, 3) are subdivided into a plurality of individual conveyor belts (4) which are arranged in parallel side by side and are each driven jointly,
b) a rotary table (5) which is pivoted on a ring gear (21) meshing with a drive sprocket and which has an essentially circular contour is positioned between the feeding (1) and the removal conveyor belts (2, 3), wherein the rotary table (5) also comprises a plurality of parallel individual conveyor belts (4),
c) which are also allocated to a joint drive, wherein
d) the feeding (1) and the individual removal conveyor belts (2, 3) each closely reach up to the individual conveyor belts (4') of the rotary table (5) and are, in essence, adjusted in their length to the circular contour of the rotary table,
e) wherein the apparatus can be operated in a reversible manner.

2. The apparatus according to Claim 1, **characterized in that** the individual conveyor belts (4) of the rotary table (5) are driven via a joint shaft (6) which extends centrally and in transverse direction in relation thereto (4).

3. The apparatus according to Claim 1 or 2, **characterized in that** the slack strands (7) of the individual conveyor belts (4') of the rotary table (5) engage underneath the shaft (6) and are driven via a countershaft (8) under frictional contact.

4. The apparatus according to Claim 2 or 3, **characterized in that** pairwise tensioning rollers (9) are arranged adjacent to the drive shaft (6), said tensioning rollers (9) pressing the conveyor belts (4') upwards, thus increasing the contact angle with an increase in friction.

5. The apparatus according to Claims 1 to 4, **characterized in that** tensioning rollers (9) are also allocated to the terminal rollers of the individual conveyor belts (4, 4').

6. The apparatus according to Claims 1 to 5, **characterized in that** individual conveyor belts (4, 4') comprise central strips (12) on their inner side, said central strips (12) running via terminal rollers (13) which comprise cornices (14) guiding the latter.

7. The apparatus according to Claims 1 to 6, **characterized in that** the ring gear (21) is supported on a rack (23).

8. The apparatus according to Claims 1 to 7, **characterized in that** the individual conveyor belts comprise a width of 100 mm.

9. A method for distributing parcel goods, wherein an apparatus according to anyone of Claims 1 to 8 is used for distribution, **comprising the following steps:**
a) feeding the parcel goods onto at least one feeding conveyor belt (1),
b) transfering the parcel goods onto a rotary table (5) which is positioned between the feeding (1) and the removal conveyor belts (2, 3), which is pivoted on a ring gear (21) meshing with a drive sprocket and which has an essentially circular contour,
c) transfering the parcel goods from the rotary table (5) onto at least one removal conveyor belt (2, 3),
d) and jointly driving each of the plurality of individual conveyor belts which are arranged in parallel side by side and are driven jointly, with the feeding conveyor belt (1), the removal conveyor belts (2, 3) and the rotary table (5) consisting of said individual conveyor belts.

10. The method according to Claim 9, **comprising the following steps**:
d) reversing a conveying direction of at least one of the feeding conveyor belts (1) and the removal conveyor belts (2, 3).

11. The method according to Claim 9 or 10, wherein the conveyance comprises at least one of the steps of distributing, merging, circulating or a combination of a plurality of the aforementioned steps.

## Revendications

1. Dispositif destiné à répartir des marchandises livrées sur une ou plusieurs bandes d'amenée (1) sur deux ou plusieurs bandes de transport (2, 3), **caractérisé par** les caractéristiques suivantes :
a) les bandes d'amenée (1) et pareillement les bandes de transport (2, 3) sont divisées en une pluralité de bandes individuelles (4) entraînées parallèlement les unes à côté des autres et respectivement en commun,
b) entre les bandes d'amenée (1) et les bandes de transport (2, 3) se trouve une table tournante (5) qui est logée de manière rotative sur une couronne dentée (21) s'engrenant avec un pignon d'entraînement et qui a un contour essentiellement circulaire, la table tournante (5) présentant également une pluralité de bandes individuelles parallèles (4),
c) qui sont également attribuées à un entraînement commun,
d) les bandes d'amenée (1) et les bandes de transport individuelles (2, 3) arrivant respectivement près des bandes individuelles (4') de la table tournante (5) et leur longueur étant adaptée essentiellement au contour circulaire de la table tournante,
e) le dispositif pouvant fonctionner de manière réversible.

2. Dispositif selon la revendication 1, **caractérisé en ce que** les bandes individuelles (4) de la table tournante (5) sont entraînées par l'intermédiaire d'un arbre commun (6) qui s'étend de manière centrale et transversalement par rapport à celle-ci.

3. Dispositif selon la revendication 1 ou 2, **caractérisé en ce que** les brins inférieurs (7) des bandes individuelles (4') de la table tournante (5) passent en dessous de l'arbre et **en ce qu'**ils sont entraînés par friction par l'intermédiaire d'un contre-arbre (8).

4. Dispositif selon la revendication 2 ou 3, **caractérisé en ce que** des poulies de tension (9) sont disposées par paires à côté de l'arbre moteur (6), lesquelles pressent les bandes (4') vers le haut et augmentent ainsi l'angle d'enroulement par augmentation de friction.

5. Dispositif selon les revendications 1 à 4, **caractérisé en ce que** des poulies de tension (9) sont également attribuées aux rouleaux terminaux des bandes individuelles (4, 4').

6. Dispositif selon les revendications 1 à 5, **caractérisé en ce que** les bandes individuelles (4, 4') présentent des baguettes (12) centrales à l'intérieur, qui circulent par l'intermédiaire de rouleaux terminaux (13) présentant des moulures (14) qui guident ceux-ci.

7. Dispositif selon les revendications 1 à 6, **caractérisé en ce que** la couronne dentée (21) est logée sur un bâti (23).

8. Dispositif selon les revendications 1 à 7, **caractérisé en ce que** les bandes individuelles présentent une largeur de 100 mm .

9. Procédé de répartition de marchandises, un dispositif de répartition selon l'une quelconque des revendications 1 à 8 étant utilisé, **comprenant les étapes suivantes :**
a) placement des marchandises sur au moins une bande d'amenée (1),
b) transfert des marchandises sur une table tournante (5) se trouvant entre les bandes d'amenée (1) et les bandes de transport (2, 3), laquelle table tournante est logée sur une couronne dentée (21) s'engrenant avec un pignon d'entraînement et a un contour essentiellement circulaire,
c) transfert des marchandises de la table tournante (5) sur au moins une bande de transport (2, 3),
d) et entraînement respectivement commun de la pluralité de bandes individuelles entraînées parallèlement les unes aux autres et en commun, desquelles sont constituées la bande d'amenée (1), les bandes de transport (2, 3) et la table tournante.

10. Procédé selon la revendication 9, **comprenant les étapes** :
d) renversement de la direction de transport d'au moins une des bandes d'amenée (1) et des bandes de transport (2, 3).

11. Procédé selon la revendication 9 ou 10, le transport comprenant au moins une des étapes répartir, regrouper, laisser circuler ou une combinaison de plusieurs des étapes mentionnées plus haut.
